# EUROPEAN PATENT APPLICATION

(11) **EP 0 608 924 A1**
(43) Date of publication of application: **03.08.1994**
(21) Application number: 94200065.4
(22) Date of filing: 13.01.1994
(51) Int. Cl.: G11B 7/24, G11B 7/00, C09K 19/38, G02F 1/1333

(54) **Homeotropically oriented liquid crystalline polymer film comprising dichroic dye**

(30) Priority: 26.01.1993 NL 9300147
(71) Applicant: Akzo Nobel N.V., NL-6824 BM Arnhem (NL)
(72) Inventor: Picken, Stephen James, NL-6824 GM Arnhem (NL)
(74) Representative: Schalkwijk, Pieter Cornelis

(57) **Abstract**

The invention pertains to a homeotropically oriented liquid crystalline polymer film comprising at least one dichroic dye. This homeotropic orientation along with the presence of dichroic dye makes it possible to employ a different technique for writing out and reading data.

For, in this case contrast is obtained by the dichroic dye contained in the film being aligned in the same direction as the mesogenic groups of the liquid crystalline polymer. In a virgin film the mesogenic groups, and hence the dichroic dye molecules, are oriented perpendicular to the film's surface, and there is only low absorption of the incident light by these molecules. By local heating or irradiation of the film (e.g., with a laser) the homeotropic orientation is converted to an isotropic one. In the case of an isotropically written trace, the dichroic dye will likewise be isotropically oriented, resulting in a substantially higher absorption of the incident light.

The films according to the invention are suitable for use in analogue and digital optical data storage, as well as, of course, combined analogue/digital data storage.

## Description

The invention pertains to a liquid crystalline polymer film comprising at least one dichroic dye. Such a polymer film has been described in EP-A1-422 538, which discloses dichroic dyes that may be used as building blocks for liquid crystalline polymers. These liquid crystalline polymers may be employed in optical information storage films. The liquid crystalline polymers described in said publication all have homogeneous planar and tangential orientation.

The known optical information storage films have failed, so far, to give optimum results. For instance, thick films must be used if sufficient contrast is to be obtained, and the use of such thick films requires a low writing speed. In addition, variations in film thickness frequently cause problems. The present invention solves or lessens these problems.

The invention consists in that the liquid crystalline polymer film is homeotropically oriented. By "homeotropically oriented" is meant that the mesogenic groups of the liquid crystalline polymer are oriented perpendicular to the surface of the film. This perpendicular orientation along with the presence of the dichroic dye makes it possible to employ a different technique for writing out and reading data.

For, in this case contrast is obtained by the dichroic dye contained in the film being aligned in the same direction as the mesogenic groups of the liquid crystalline polymer. Dichroic dyes will absorb one polarisation direction of the light to a much greater extent than the other ones. Generally, this direction, averaged out on the basis of molecular movement, coincides with the long axis of the dye molecule. In a virgin film the mesogenic groups, and hence the dichroic dye molecules, are oriented perpendicular to the film's surface, and there is only low absorption of the incident light by these molecules. (It should be noted that the light's polarisation direction is perpendicular to its propagation direction.) By local heating or irradiation (e.g., with a laser) the homeotropic orientation is converted to an isotropic one. In the case of an isotropically written trace, the dichroic dye will likewise be isotropically oriented, resulting in a substantially higher absorption of the incident light. The reading takes place as a function of the absorption maximum of the dichroic dye at visible light, ultraviolet light, or infra-red light.

Employing this technique in optical data storage makes it possible to attain a high contrast, even for thin films. Because of the homeotropic orientation, reading may be carried out with unpolarised light, so polarisers, which not only are expensive, but also give low transmission at diazo wavelengths ( approx. 410 nm), are not required. A further advantage of this writing/reading method is that there are no extremely high demands as to a homogeneous film thickness. The homeotropically oriented liquid crystalline films according to the invention are suitable for use in analogue and digital optical data storage, as well as, of course, combined analogue/digital data storage.

The dichroic dye may be mixed into the liquid crystalline polymer or, alternatively, covalently bonded thereto. Another option is to use a liquid crystalline polymer of which the mesogenic group is itself dichroic. In that case, of course, there is no need to add a dichroic dye. Examples of such mesogenic groups are stilbene side groups and fully aromatic Schiff bases (.i.e, an imine group, substituted on both sides with an aromatic ring.

In principle, any dichroic dye may be employed, providing it is sufficiently stable to be mixed into the polymer or bonded thereto.

For the use in analog data storage, particular preference is given to ultraviolet light-absorbing dichroic dyes, since the described liquid crystalline films can be multiplied by means of diazo-copying. Examples of suitable dichroic dyes are D2 manufactured by Merck® and Sudan Orange G. For human readable storage visible dichroism is preferred from for instance, D2 and Sudan Orange G.

For digital storage particular preference is given to infrared dichroic dyes to allow modulation of the film reflectance at appropriate infrared wavelength (780 - 820 nm). Suitable dichroic infrared dyes are crocomium dyes, squarilium dyes, and infrared azamethine dyes.

Suitable in principle are all liquid crystalline polymers transparent in the visible field which have a nematic or a smectic-A phase, preferably in the range of Tg = 85°C to Tc = 120°C. Examples include liquid crystalline polyesters, liquid crystalline polyurethanes, liquid crystalline polycarbonates, liquid crystalline poly(meth)acrylates, liquid crystalline polyimides, liquid crystalline polyamides, and liquid crystalline polyamidimides.

Particular preference is given to liquid crystalline side chain polyesters and liquid crystalline side chain polyurethanes, since they are easy to prepare and have tolerable thermal and chemical stability as well as passable UV irradiation resistance.

Pre-eminently suitable were found to be especially polyurethanes and polyesters having mesogenic groups according to formula 1 below: 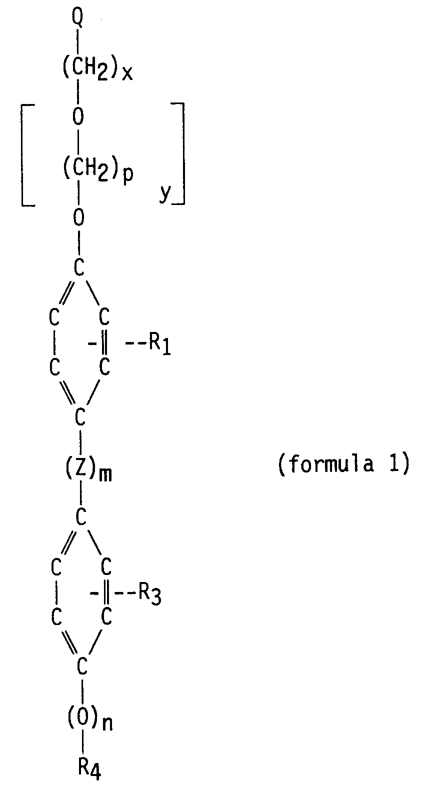
wherein
- R₁: =-halogen, -R₂, -OR₂, 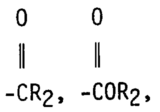 -CN or -CF₃;
- R₂: =-H or an alkyl group having 1-3 carbon atoms;
- R₃: may represent the same groups as R₁, but be selected independently from R₁;
- Q: stands for the monomer radical connecting the mesogenic group to the polymer main chain;
- n: is 0 or 1;
- m: is 0 or 1;
- y: is an integer from 0 through 3;
- p: is an integer from 2 through 4;
- R₄: = an alkyl group having 1-12 carbon atoms;
- x: is an integer from 0 through 6;
- Z: = -C=N-, -N=C-, 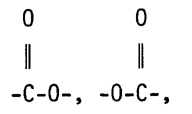 -C=C-.

Polyesters and polyurethanes having side groups according to formula 1 are so suitable in particular because by differing the spacer length and the length of alkyl group R₄ and using a mixture of diacid chlorides and diisocyanates, respectively, it is possible to exactly set the Tg and the Tc. To this end reference is made to EP-A-0 550 105. The techniques used in said document for setting the Tg and the Tc of these liquid crystalline polyurethanes apply equally in the case of the liquid crystalline polyesters having mesogenic groups according to formula 1. For the liquid crystalline polyurethanes' preparation and other information thereon, reference is also made to this application, which is to be considered incorporated herein by reference.

For the specific preparation of the liquid crystalline side chain polyesters reference is made to EP-A-0 478 052 (date of publication: 1-4-1992).

A further advantage of the aforementioned polyesters and polyurethanes consists in their having dichroic side groups, if Z= -C=N-, -N=C-, and -C=C- in the ultraviolet wavelength area.

Ordinarily, a film is made by applying a solution of the polymer onto a substrate and evaporating the solvent. The suitable substrates include PET, PET-gold, PET-ITO, PET-Al, metal, glass, cellulose acetate, polycarbonate, polycarbonate-Al, silicon, etc. As a rule, films of a thickness of 0.5 to 10 micrometers are employed.

The liquid crystalline polymer may be homeotropically oriented in several ways:
1. By treating the substrate's surface with homeotropic orientation inducing surfactants, such as silanes, higher alcohols, and the like, e.g., n-dodecanol and Liquicoat®, ex Merck.
2. By (corona) poling the liquid crystalline layer using a needle or a thin wire, or by using a substrate provided with an indium-tin-oxide (ITO) layer or some other conductive layer with which the poling field may be applied to the liquid crystalline layer. Alternatively, the liquid crystalline layer may be provided with a conductive layer on either side, and an electric field applied thereto.
3. By homeotropically orienting polymers with smectic-A orientation after lamination through passing the films over heated rollers. The resulting shear deformation causes the mesogenic groups to be homeotropically oriented.

When homeotropic films are produced by means of a surface treatment, the polymer film's viscosity and layer thickness are of importance.

When it is envisaged to employ a solid state laser for writing of data in analog storage, the liquid crystalline film has to be, or has to be made, infra-red light absorbing. In general, this is done by the mixing in or incorporating of an infra-red absorbing dye. It is advisable to have an infra-red absorbing dye which is barely oriented or not very dichroic, since in that case absorption during the writing process would be unsatisfactory. For that reason preference is given to infra-red absorbing dyes which do not have an elongated shape (e.g., molecules in platelet form or tetrahedra). Alternatively, an infra-red dichroic dye may be used which has its highest absorbency perpendicular to the molecular axis. Of course, in that case the use of an oriented dye is advisable.

For digital storage, in which both the writing and the reading is done in the infrared wavelength area, it is advisable to use an infrared dye which is dichroic. During writing a higher laser power (light intensity) is used, while during reading a lower laser power is used. For making compact disks which comply with the norm of background transmission of 70 % and the written transmission being 40% of the background transmission i.e. 28%, a dichroic ratio (α∥ / α┴ ) of at least 8.7 is required.

The invention will be illustrated with reference to the unlimitative example below.

A croconium dye (CR) was prepared according to Example 4 of EP-0 478 052.

A film consisting of a thin layer of a liquid crystalline polyester (LCP) according to Example 4 of EP-0 350 113 with a diol of Example 1 and adipoylchloride (approx. 0.5 µm thick) containing about 5% of the CR infrared dye on an Al-coated PET substrate was prepared by spin coating at 2000 rpm from a 20 wt% solution of the LCP and dye in cyclopentanone (η=5 mPa). After drying of approximately 24 hours the sample is homeotropically oriented using a corona polyng process (V= 6- 10 kV, T= 40-80 °C) This leads to a transparant homeotropic layer of liquid crystalline polyester.

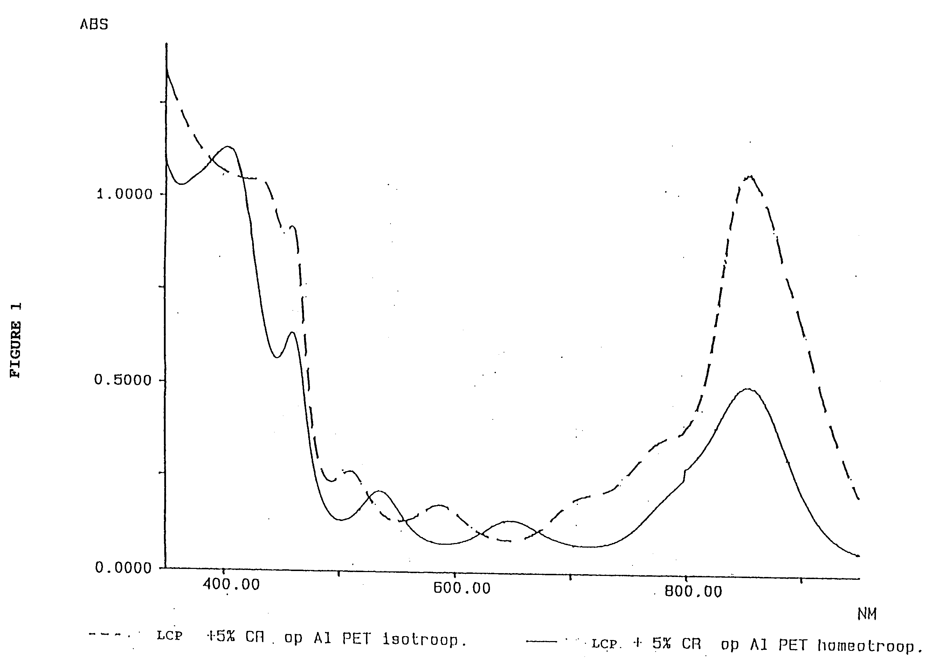

A reflection spectrum of the obtained sample is shown in figure 1. The dominant reflections are in the ultraviolet wavelength area from the hydroxy-nitro-stilbene sidechains of the LCP and in the infrared wavelength area from the CR infrared dye. By making the sample isotropic above Tc, and cooling down rapidly to below Tg, an unoriented transparent isotropic film can be made. The spectrum of this film is also shown in figure 1. From the difference between the spectrum obtained from the homeotropic sample and the isotropic sample, it can be concluded that both the liquid crystalline side chain and the infrared dye show dichroism with a positive ratio. The observed effect can be used for data storage.

## Claims

1. Liquid crystalline polymer film comprising at least one dichroic dye, characterised in that the liquid crystalline polymer film is homeotropically oriented.

2. Liquid crystalline polymer film according to claim 1, characterised in that the dichroic dye is a mesogenic group of the liquid crystalline polymer.
